# EUROPÄISCHE PATENTSCHRIFT

(11) **EP 2 750 958 B1**
(45) Veröffentlichungstag und Bekanntmachung des Hinweises auf die Patenterteilung: **08.07.2015**
(21) Anmeldenummer: 12743082.5
(22) Anmeldetag: 27.07.2012
(51) Int. Cl.: B62D 1/04, B62D 1/06, B60Q 3/02

(54) **LENKRADKRANZ UND KRAFTFAHRZEUG**
STEERING WHEEL RIM AND MOTOR VEHICLE
COURONNE DU VOLANT ET VÉHICULE À MOTEUR

(30) Priorität: 01.09.2011 DE 102011112134
(43) Veröffentlichungstag der Anmeldung: 09.07.2014
(73) Patentinhaber: Audi AG, 85045 Ingolstadt (DE)
(72) Erfinder: TOVAR, Johannes, 85049 Ingolstadt (DE); REUSCHEL, Jens Dietmar, 85053 Ingolstadt (DE); SCHMITZ, Christoph, 93326 Abensberg (DE); MOHOS, Richard, 10999 Berlin (DE)
(74) Vertreter: Brandt, Kai
(86) Internationale Anmeldenummer: PCT/EP2012/003204
(87) Internationale Veröffentlichungsnummer: WO 2013/029727

(56) Entgegenhaltungen:
- EP-A1- 1 069 023
- WO-A2-2009/030223
- DE-A1-102009 059 670
- DE-U1- 20 311 729

## Beschreibung

Die Erfindung betrifft eine Anordnung zum Verkleiden eines Bauteils, insbesondere eines Lenkradkranzes, eines Kraftfahrzeugs, welches Bauteil eine insbesondere umlaufende Befestigungsvertiefung aufweist, wobei die Anordnung einen insbesondere aus einem flexiblen und/oder grifffestem Material bestehenden Bezug und wenigstens ein Befestigungselement, insbesondere ein Klemmelement, zur Befestigung der Ränder des um das Bauteil gelegten Bezugs in der Befestigungsvertiefung aufweist. Daneben betrifft die Erfindung ein Bauteil mit einer solchen Anordnung sowie ein Kraftfahrzeug mit einem solchen Bauteil.

In Kraftfahrzeugen kommt es häufig vor, meist aus Komfort- und Designgründen, dass Bauteile zusätzlich mit einem Bezug versehen werden, mithin in diesen eingekleidet werden. Das prominenteste Beispiel für ein solches Bauteil ist der Lenkradkranz eines Lenkrades. Dort kann beispielsweise ein Lenkradbezug auf Leder, Lederimitat, Stoff oder dergleichen aufgezogen werden. Zur Befestigung des Bezugs, der rutschsicher und gut greifbar an dem Bauteil anliegen soll, sind dabei, insbesondere in Bezug auf ein Lenkrad, mehrere Varianten im Stand der Technik bekannt.

So kann vorgesehen sein, dass der um das Bauteil gelegte Bezug vernäht ist. Nähte sind jedoch nachteilhaft, da sie äußerst kompliziert anzufertigen sind und sich über die Laufzeit des Kraftfahrzeuges wieder ablösen können. Daher wurde vorgeschlagen, in einem anderen Befestigungsverfahren den Bezug letztlich festzuklemmen, insbesondere durch ein Befestigungselement in einer Vertiefung bzw. Aussparung des Bauteils. Dabei kann ein derartiges Befestigungselement, welches den Bezug durch Klemm- und Reibungskräfte hält, auch als "Clip" bezeichnet werden.

Eine derartige Anordnung ist beispielsweise aus GB 1 398 685 B bekannt. Darin wird ein Lenkrad mit einem Lenkradkranz vorgeschlagen, der eine kontinuierliche, umlaufende Vertiefung aufweist. Ein Bezug aus einem flexiblen Material bedeckt den Lenkradkranz und wird befestigt, indem gegenüberliegende longitudinale Ränder des Bezugs in der Vertiefung aufgenommen werden und durch einen Einsatz (Befestigungselement) in diesem gehalten werden.

EP 1 069 023-A1 beschreibt einen Lenkradkranz mit den Merkmalen des Oberbegriffs des Anspruchs 1.

Nachteil der Verwendung derartiger Befestigungselemente ist, dass sie häufig dem Design nicht zuträglich sind, nachdem ein bloßes Befestigungselement innerhalb des Bezugs beispielsweise störend wirken kann.

Der Erfindung liegt daher die Aufgabe zugrunde, gleichzeitig die Funktionalität und die optische Wirkung eines derart bezogenen Bauteils zu verbessern.

Diese Aufgabe wird gelöst durch einen Lenkradkranz mit den in Anspruch 1 angegebenen Merkmalen.

Es wird also einen Lenkradkranz vorgeschlagen bei dem, das Befestigungselement, also insbesondere ein Klemmelement bzw. Clip, zumindest teilweise beleuchtbar auszugestalten, indem wenigstens ein Teil des Befestigungselements, wobei bei mehreren Befestigungselementen auch nur ein Teil der Befestigungselemente als Lichtquellen ausgebildet sein können oder Lichtquellen aufweisen können, als eine Lichtquelle wirkt. Auf diese Weise kann das Befestigungselement als eine Anzeigevorrichtung bzw. als ein Anzeigemedium dienen, das insbesondere am Lenkradkranz eines Lenkrades vorteilhaft neue Anzeigemöglichkeiten sowie neue Bezugsmöglichkeiten schafft. Letztlich wird also ein wenigstens teilweise beleuchtbarer "Clip" vorgeschlagen.

Dabei kann mit besonderem Vorteil vorgesehen sein, dass das Befestigungselement einen Lichtleiter umfasst und/oder ein Lichtleiter ist. Lichtleiter stellen besonders vorteilhaft einsetzbare Lichtquellen für ein Befestigungselement dar, nachdem auch ausgedehnte, insbesondere gleichmäßig beleuchtbare Lichtleiter aus verschiedensten Materialien bekannt sind, die auch die notwendige Nachgiebigkeit aufweisen können, so dass das Befestigungselement in die Vertiefung eingepresst werden kann und dort seine den Bezug haltende Wirkung entfaltet. An den Lichtleiter als Lichtquelle muss lediglich noch, insbesondere seitens des Befestigungselements selbst. Lichtleiter bieten insbesondere eine Vielzahl von Möglichkeiten zur speziellen Ausgestaltung der Lichtquelle und somit der vorgesehenen Funktion als Anzeigevorrichtung. So sind Lichtleiter bekannt, die eine flächige, gleichmäßig ausgeleuchtete Lichtquelle bilden können. Ein solcher Lichtleiter kann beispielsweise Streupartikel und/oder wenigstens eine aufgeraute Oberfläche umfassen. Es sind jedoch auch Lichtleiter bekannt, die das Licht an bestimmten, definierten Stellen auskoppeln und so beispielsweise bestimmte Muster und/oder geometrische Formen realisieren können, die mithin nicht nur das Aussehen des Bauteils verbessern, sondern zusätzlich auch zur Informationswiedergabe einsetzbar sind. Vorgesehen sein kann auch, dass der Lichtleiter an den nicht als nicht Austrittsfläche oder Ankoppelfläche dienenden Oberflächen eine reflektierende Beschichtung aufweist, um Verluste zu vermeiden. Geeignete Lichtleiter sind im Stand der Technik weithin bekannt und sollen hier nicht näher dargelegt werden.

Es kann ferner vorgesehen sein, dass der Bezug mehrere Bezugsabschnitte umfasst, denen jeweils ein Befestigungselement zugeordnet ist. Der Bezug muss mithin nicht als vollständiges, das gesamte Bauteil überdeckendes Element hergestellt werden, sondern er kann mehrere Bezugsabschnitte umfassen, beispielsweise im Falle eines Lenkradkranzes solche, die immer einen Teilwinkel des Lenkradkranzes überdecken und denen dann auch jeweils ein Befestigungselement zugeordnet sein kann.

Als Material des Bezugs kann beispielsweise Leder oder Lederimitat oder Stoff verwendet werden. Selbstverständlich sind auch andere Materialien denkbar, die eine geeignete Oberfläche bieten und gegebenenfalls vorliegenden Designanforderungen gerecht werden. Möglich ist es zudem, zwischen dem Bezug und dem Bauteil als Teil der Anordnung ein Haftelement bzw. eine Haftlage vorzusehen, beispielsweise eine dünne Haftfolie, die einem Verrutschen des Bezugs gegen das Bauteil entgegenwirkt.

Ausgestaltungen des Befestigungselements sind aus dem Stand der Technik bereits bekannt. So kann dieses beispielsweise einen Querschnitt aufweisen, der - gegebenenfalls dem Querschnitt der Vertiefung angepasst - eine verbesserte Halterung des Bezuges in der Vertiefung ermöglicht, beispielsweise innerhalb der Vertiefung liegende, vorspringende Abschnitte, die einen besonders hohen Haltdruck bzw. Klemmdruck ausüben und/oder mit entsprechenden Ausnehmungen in der Vertiefung korrespondieren. Allgemein wird das als Einsatz wirkende Befestigungselement zwischen den beiden Rändern des Bezugs in der Ausnehmung aufgenommen und presst die Ränder gegen die Seiten der Vertiefung, so dass eine relative Bewegung zwischen den Rändern und den Seitenwänden der Vertiefung vermieden wird. Das Befestigungselement kann zudem so ausgebildet sein, dass es die Vertiefung möglichst gut abdeckt.

Die Vertiefung in dem Bauteil, insbesondere dem Lenkradkranz, kann durch eine einfache Nut passenden Querschnitts realisiert werden, im einfachsten Fall eines rechteckigen Querschnitts. Denkbar ist es jedoch auch, dass das Bauteil innen hohl ist und sich eine Öffnung in das Bauteil hinein bildet.

Es kann ferner vorgesehen sein, dass das Befestigungselement in dem zum Andrücken der Ränder innerhalb der Vertiefung vorgesehenen Bereich Zähne und/oder Haken und/oder ähnliche Vorsprünge aufweist, die wenigstens teilweise das Material des Bezugs durchdringen, um eine relative Bewegung weiter zu behindern.

Wie bereits angedeutet, kann vorgesehen sein, dass in der Befestigungsvertiefung wenigstens ein mit einem Lichtleiter des Befestigungselements oder dem als Lichtleiter ausgebildeten Befestigungselement koppelbares Leuchtmittel angeordnet ist. In diesem Fall kann also das Bauteil, insbesondere der Lenkradkranz, genutzt werden, um das Leuchtmittel vorzusehen, welches insbesondere über eine geeignete Ankopplungsfläche an den Lichtleiter ankoppelbar ist, so dass keine komplexe Energieübertragung in das Befestigungselement notwendig ist. Als Leuchtmittel können bevorzugt wiederum LEDs vorgesehen sein, wobei im Beispiel eines Lenkrads die elektrische Energieversorgung beispielsweise über die Lenksäule vorgesehen werden kann. Wird seitens des Befestigungselements eine Ankopplungsfläche für das Leuchtmittel vorgesehen, die ausgedehnt ist, beispielsweise im Falle eines Lenkradkranzes den gesamten Lenkradkranz umlaufend, lässt sich das Befestigungselement auch freier bzw. gänzlich beliebig positionieren. Im Falle eines ausgedehnten Lichtleiters oder mehrerer, insbesondere unterschiedliche Lichtquellen bildender Lichtleiter, können auch mehrere Leuchtmittel, insbesondere mehrere LEDs, vertiefungsseitig vorgesehen sein. Dabei ist jedoch zu beachten, dass bei mehreren Lichtquellen, insbesondere, wenn es auf die bereits diskutierte Anzeigemöglichkeit ankommt, eine "freie Positionierbarkeit" eingeschränkt sein kann.

Schließlich betrifft die Erfindung noch ein Kraftfahrzeug, umfassend ein erfindungsgemäßes Bauteil. Dabei ist das Bauteil mit besonderem Vorteil als Lenkradkranz eines Lenkrades ausgebildet. Sämtliche Ausführungen bezüglich des Bauteils bzw. der Anordnung lassen sich auch auf das Kraftfahrzeug übertragen, so dass auch hier die genannten Vorteile erreicht werden können.

In vorteilhafter weiterer Ausbildung des erfindungsgemäßen Kraftfahrzeugs kann vorgesehen sein, dass es ein Steuergerät zur Aktivierung und Deaktivierung der Lichtquelle umfasst. Der Betrieb der Lichtquelle, also das Leuchten des Befestigungselements, wird mithin durch ein Steuergerät des Kräftfahrzeuges kontrolliert, wodurch die bereits erwähnte Funktion einer Anzeigevorrichtung hergestellt wird. Hierzu kann zweckmäßigerweise vorgesehen sein, dass das Steuergerät zur Aktivierung und/oder Deaktivierung der Lichtquelle, also letztlich zur Bestromung eines der Lichtquelle zugeordneten Leuchtmittels, in Abhängigkeit wenigstens eines Betriebseigenschaft des Kraftfahrzeugs ausgebildet ist. Dabei kann beispielsweise vorgesehen sein, dass das Bauteil ein Lenkradkranz eines Lenkrades ist und die Betriebseigenschaft ein autonomer Fahrbetrieb ist, bei dessen Aktivierung die Lichtquelle aktiviert wird. Das bedeutet also, der Fahrer kann einen autonomen Fahrbetrieb, beispielsweise bei Verwendung eines Einparkassistenten, eines Stauassistenten oder dergleichen, an der Beleuchtung des Lenkradkranzes erkennen, so dass ihm beispielsweise vermittelt werden kann, dass er das Lenkrad nicht mehr selbst betätigen muss. Jedoch können auch andere Betriebszustände bzw. Betriebseigenschaften des Kraftfahrzeugs abgebildet werden, insbesondere in Bezug auf das Lenksystem, beispielsweise verschiedene Betriebsmodi eines Servo-Systems und dergleichen.

Die Vielseitigkeit, Flexibilität und Anwendbarkeit der durch die beleuchtbare Ausgestaltung der Befestigungselemente gebildeten Anzeigevorrichtung kann noch erhöht werden, wenn bei mehreren Befestigungselementen und/oder bei mehreren Lichtquellen pro Befestigungselement die Lichtquellen unabhängig ansteuerbar sind. In diesem Zusammenhang kann beispielsweise vorgesehen sein, dass die Lichtquellen eine Segmentanzeige bilden. Denkbar ist es jedoch auch, insbesondere bei unterschiedlicher geometrischer Ausgestaltung der Lichtquellen, beispielsweise in Form von beleuchtbaren Symbolen und dergleichen, verschiedenste Betriebseigenschaften eines Kraftfahrzeugs durch gezielte Aktivierung der zugeordneten Lichtquellen anzuzeigen. Eine Segmentanzeige kann beispielsweise von Nutzen sein, wenn über die gebildete Anzeigevorrichtung ein kontinuierlicher Parameter als Betriebseigenschaft angezeigt werden soll, beispielsweise die Stärke einer Servounterstützung.

Es sei an dieser Stelle jedoch auch noch angemerkt, dass die Lichtquelle eines Befestigungselements auch ohne jede Ansteuerung eine Anzeigefunktion erfüllen kann, beispielsweise, wenn eine die Mittenstellung des Lenkrads anzeigende Lichtquelle verwendet wird. Einem Fahrer kann dann auf einfache Weise vermittelt werden, wo sich die Mittenstellung des Lenkrads befindet, insbesondere auch dann, wenn es im Kraftfahrzeug recht dunkel ist.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Kraftfahrzeugs,
- Fig. 2: eine Aufsicht auf ein Lenkrad in einer ersten Ausführungsform der vorliegenden Erfindung,
- Fig. 3: einen Querschnitt entlang der Linie III-III in Fig. 2 in einem ersten Ausführungsbeispiel,
- Fig. 4: einen Querschnitt analog Fig. 3 in einem zweiten Ausführungsbeispiel,
- Fig. 5: eine perspektivische Ansicht von Segmenten einer erfindungsgemäßen Anordnung in einer zweiten Ausführungsform,
- Fig. 6: eine Aufsicht auf einen Lenkradkranz in einer dritten Ausführungsform,
- Fig. 7: eine Aufsicht auf ein erfindungsgemäßes Bauteil, und
- Fig. 8: einen Querschnitt durch ein im Rahmen der Erfindung verwendbares Befestigungselement.

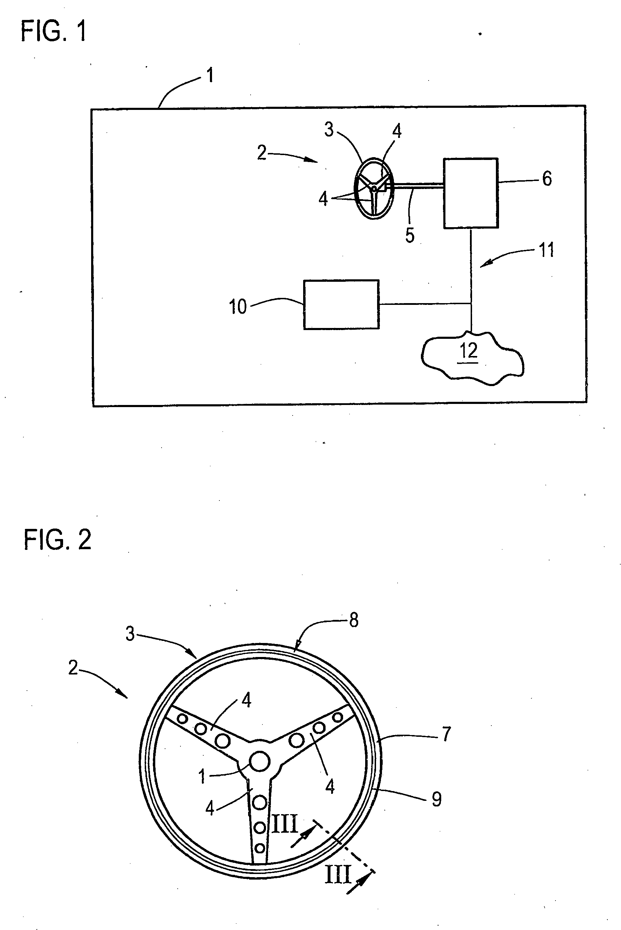

Fig. 1 zeigt eine Prinzipskizze eines erfindungsgemäßen Kraftfahrzeugs 1. Es umfasst wie grundsätzlich bekannt ein Lenkrad 2, welches einen Lenkradkranz 3 und Streben 4 aufweist. Über eine Lenksäule 5 ist das Lenkrad 2 wie bekannt mit einem Lenksystem 6 verbunden.

Fig. 2 zeigt eine Aufsicht auf das Lenkrad 2 in einer ersten Ausführungsform der vorliegenden Erfindung. Zentral ist die Lenksäule 5 zu erkennen, von der ausgehend sich die Streben 4 erstrecken. Der Lenkradkranz 3 als Bauteil ist durch eine erfindungsgemäße Verkleidungsanordnung bezogen, welche einen um den Grundkörper des Lenkradkranzes 3 gelegten Bezug 7 umfasst. Zur Befestigung des Bezuges 7 ist ein Befestigungselement 8, welches hier als Klemmelement wirkt, vorgesehen, welches derart in eine umlaufende Befestigungsvertiefung des Grundkörpers des Lenkradkranzes 3 eingesetzt ist, dass es in die Vertiefung hineingefaltete gegenüberliegende Ränder des Bezugs 7 gegen die Wände der Vertiefung presst und somit den Bezug 7 fest hält. Ein solches Befestigungselement 8 kann auch als "Clip" bezeichnet werden.

In diesem Ausführungsbeispiel ist das Befestigungselement 8 einstückig ausgebildet und besteht komplett aus einem Lichtleiter 9, bildet also eine umlaufende Lichtquelle.

Zur Ansteuerung, also zum Ein- und Ausschalten der Lichtquelle ist nun, vgl. Fig. 1, ein Steuergerät 10 vorgesehen, welches die Lichtquelle, genauer ein dem Lichtleiter 9 zugeordnetes Leuchtmittel, in Abhängigkeit von einer Betriebseigenschaft des Kraftfahrzeugs 1 aktiviert bzw. deaktiviert, so dass das Befestigungselement 8 insgesamt auch als eine Anzeigevorrichtung fungiert. Um die Betriebseigenschaft des Kraftfahrzeugs 1 zu ermitteln, ist das Steuergerät 10 an einen nur angedeuteten CAN-Bus 11 angeschlossen, an den auch das Lenksystem 6 und andere Fahrzeugsysteme, schematisch dargestellt bei 12, angeschlossen sind.

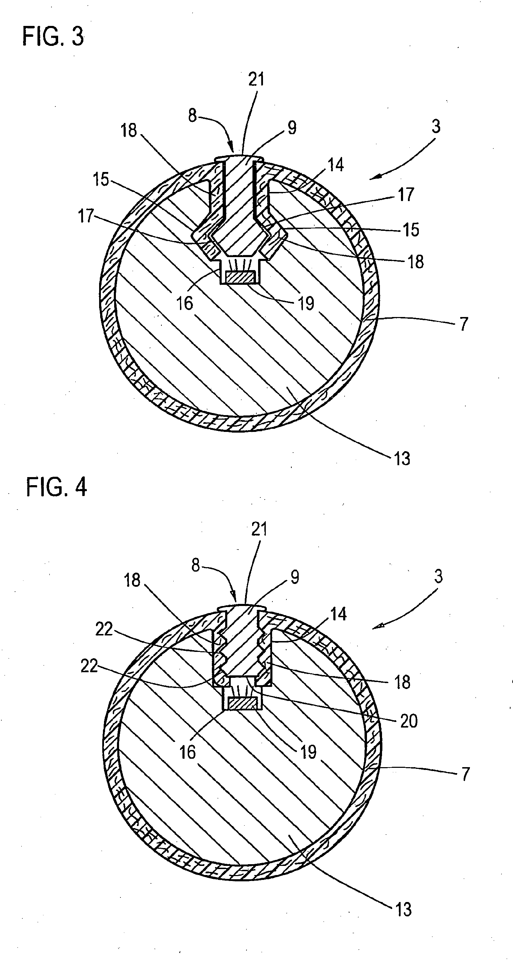

Fig. 3 und Fig. 4 zeigen nun verschiedene Ausführungsbeispiele, wie eine konkrete Ausgestaltung des Befestigungselements 8 und der Halterung vorgenommen werden kann. Es handelt sich dabei um Schnitte entlang der Linie III-III in Fig. 2. Zu sehen ist der Grundkörper 13 des Lenkradkranzes 3, um den herum der Bezug 7 gelegt ist, der beispielsweise aus Leder, Lederimitat oder Stoff bestehen kann. Der Bezug 7 ist flexibel, so dass er um den Grundkörper 13 gespannt werden kann, und grifffest, so dass er eine gute Griffmöglichkeit bietet. Es sind Ausführungsbeispiele denkbar, wo eine Zwischenlage bzw. Haltelage zwischen dem Bezug 7 und dem Grundkörper 13 vorgesehen ist, um ein Verrutschen des Bezugs 7 auf dem Grundkörper 13 zu vermeiden.

Die Ränder des Bezugs 7 sind in die als profilierte Nut ausgebildete Vertiefung 14 eingebogen worden, welche im unteren Bereich zwei Aussparungen 15 und eine weitere Aussparung 16 aufweist. Das Befestigungselement 8, bestehend aus dem Lichtleiter 9, wird nun in die Vertiefung 14 hineingepresst. Ersichtlich weist es mit den Aussparungen 15 korrespondierende Vorsprünge 17 auf, die ein Herausrutschen des Befestigungselements 8 vermeiden und für eine festere Halterung sorgen, nachdem die Ränder 18 des Bezugs 7 ebenso in die Aussparungen 15 hineingepresst werden.

Die Aussparung 16 wird vorliegend genutzt, um eine LED 19 benachbart einer Ankopplungsfläche 20 des Lichtleiters 9 zu positionieren, wobei mehrere LEDs 19 über den Umfang des Lenkradkranzes 3 verteilt vorgesehen sind. Nach außen hin bildet der Lichtleiter 9 eine Anzeigefläche bzw. Lichtaustrittsfläche 21, wobei sämtliche weiteren Außenflächen des Lichtleiters 9 außer der Lichtaustrittsfläche 21 und der Ankopplungsfläche 20 mit einer hier nicht näher dargestellten reflektierenden Beschichtung versehen sind, um Verluste zu vermeiden. Der Lichtleiter 9 weist ebenso nicht näher dargestellte Inhomogenitäten und/oder Streupartikel auf, die einen gleichmäßigen Austritt des durch die LEDs 19 in den Lichtleiter 9 eingestrahlten Lichtes aus der Lichtaustrittsfläche 21 begünstigen, so dass letztlich bei betriebenen Leuchtmitteln 19 in der Ausführungsform der Fig. 2 das gesamte Befestigungselement 8 als Lichtquelle gleichmäßig leuchtend erstrahlt.

Ein leicht modifiziertes Ausführungsbeispiel zeigt die Fig. 4, worin die Vertiefung 14 bis auf die Aussparung 16 im Querschnitt rechteckig ausgebildet ist und eine verbesserte Halterung der Ränder 18 des Bezugs 7 durch von dem Befestigungselement 8 hervorstehende Zähne 22 erzeugt wird, die sich in das Material des Bezugs 7 hineinpressen und diesen haltern.

Selbstverständlich können solche Zähne oder andersartige Vorsprünge dieser Art, beispielsweise Haken, auch im Ausführungsbeispiel nach Fig. 3 vorgesehen sein.

In der ersten Ausführungsform nach Fig. 2, wenn durch das Befestigungselement 8 eine einzige Lichtquelle gebildet wird, kann das Steuergerät 10 beispielsweise auch ausgebildet sein, diese Lichtquelle anzuschalten, wenn sich das Kraftfahrzeug 1 in einem autonomen Betriebsmodus befindet oder dergleichen. Grundsätzlich kann auch vorgesehen sein, dass die Lichtquelle immer betrieben wird, wenn das Kraftfahrzeug angeschaltet ist und so den betriebsbereiten Zustand anzeigen.

Es sei an dieser Stelle noch angemerkt, dass es grundsätzlich auch denkbar ist, ein Leuchtmittel, also beispielsweise eine LED 19, innerhalb des Befestigungselements 8 vorzusehen, wobei elektrische Energie dann beispielsweise über eine Schleifkupplung, einen Federkontakt oder dergleichen hergestellt werden kann. Grundsätzlich erfolgt die Stromzuleitung, wie bekannt, durch die Lenksäule 5 und die Streben 4.

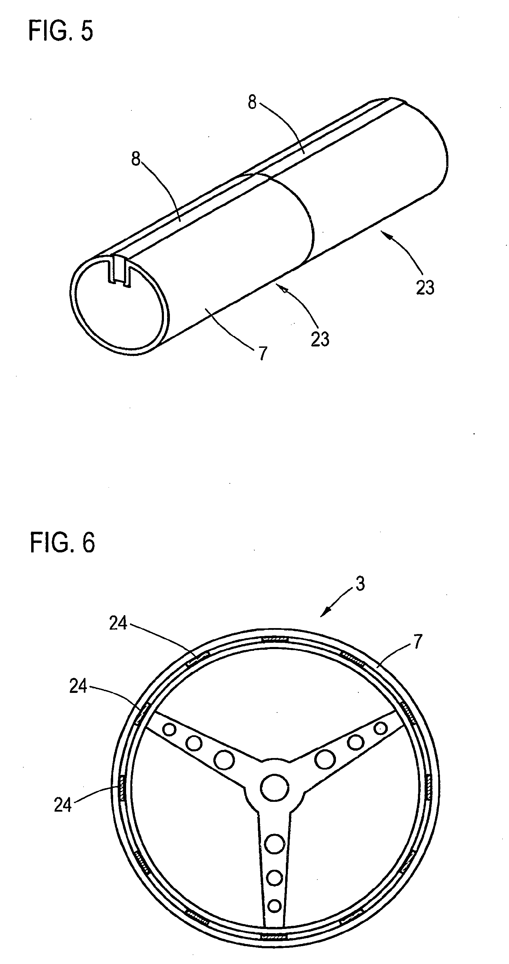

Fig. 5 zeigt eine weitere Ausführungsform einer erfindungsgemäßen Verkleidungsanordnung, in einer Perspektivansicht, wobei der Bezug 7 mehrere Bezugsabschnitte 23 umfasst, wobei entsprechend jedem Bezugsabschnitt 23 ein eigenes Befestigungselement 8 zugeordnet ist.

In diesem Fall kann vorgesehen sein, dass jedes Befestigungselement 8, so es wieder gänzlich aus dem Lichtleiter 9 besteht, als eigene Lichtquelle betrieben werden kann, wobei bei unabhängiger Ansteuerbarkeit der gebildeten Lichtquellen beispielsweise eine Segmentanzeige realisiert werden kann.

Eine solche Möglichkeit zur Realisierung einer Segmentanzeige zeigt auch die Aufsicht auf den Lenkradkranz 3 in der Ausführungsform gemäß Fig. 6, worin beabstandete Segment-Lichtquellen 24 realisiert sind. Dies kann geschehen, indem der Lichtleiter 9 nur einen Teil des Befestigungselements 8 bildet oder die Lichtaustrittsfläche 21 entsprechend eingeschränkt wird.

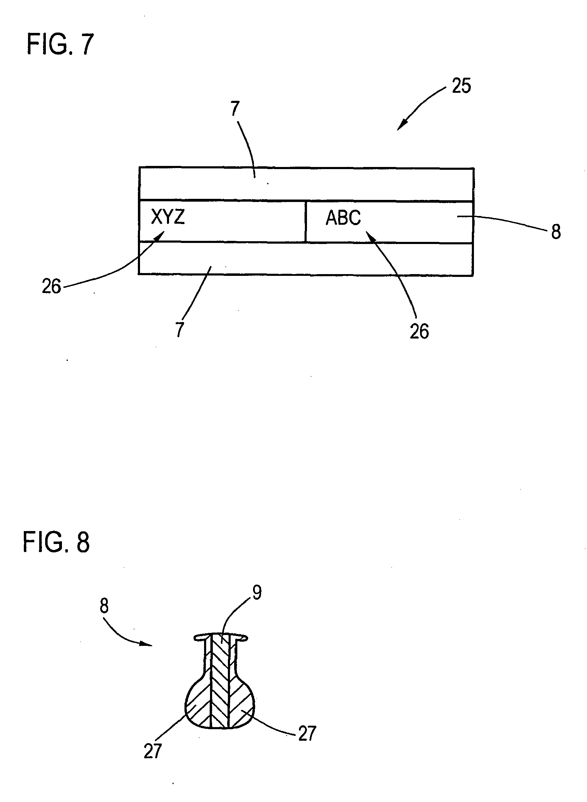

Fig. 7 zeigt schließlich in Form einer weiteren Ausführungsform ein weiteres erfindungsgemäßes Bauteil 25, welches ebenso bereits mit einem Bezug 7 verkleidet ist, der durch zwei Befestigungselemente 8 gehalten wird. Die Lichtquellen bilden in ihrer geometrischen Ausgestaltung vorliegend beleuchtbare Symbole 26, beispielsweise Texte, so dass verschiedene Informationen vermittelt werden können. Diese können auch durch eine entsprechende Ausgestaltung von Lichtaustrittsflächen 21 des Lichtleiters 9 geschaffen werden, denkbar ist es jedoch auch, hier durch einzelne, innerhalb der Befestigungselemente 8 verbaute Leuchtmittel, insbesondere LEDs 19, hinterleuchtbare Zeichen bzw. Symbole 26 zu realisieren und dergleichen.

Fig. 8 zeigt einen Querschnitt eines weiteren, im Rahmen der vorliegenden Erfindung verwendbaren Befestigungselements 8. Dabei wird nur der zentrale Anteil des Befestigungselements 8 durch den Lichtleiter 9 gebildet, an welchen zu beiden Seiten Formkörper 27 aus einem Material anschließen, dass hinreichend nachgiebig ist, um in die Befestigungsvertiefung 14 hineingepresst zu werden und dort den Bezug 7 zu halten. Der Lichtleiter 9 kann in diesem Fall auch aus einem starreren Lichtleitermaterial ausgebildet sein.

Zusammenfassend schlägt die Erfindung also vor, ein Befestigungselement 8 zusätzlich zu seiner befestigenden Funktion auch als eine Lichtquelle, beispielsweise die Lichtquelle 24, umfassend auszubilden, so dass es als Anzeigevorrichtung wirken kann und gleichzeitig eine ansprechendere optischere Gestaltung bietet.

## Patentansprüche

1. Lenkradkranz (3) eines Kraftfahrzeugs (1), der eine den Lenkradkranz (3) verkleidende Anordnung umfasst und eine Befestigungsvertiefung (14) aufweist, wobei die Anordnung einen insbesondere aus einem flexiblen und/oder grifffesten Material bestehenden Bezug (7) und wenigstens ein Befestigungselement (8), insbesondere ein Klemmelement, zur Befestigung der Ränder (18) des um den Lenkradkranz (3) gelegten Bezugs (7) in der Befestigungsvertiefung (14) aufweist, wobei das oder wenigstens ein Befestigungselement (8) als eine Lichtquelle (24) ausgebildet ist und/oder wenigstens eine Lichtquelle (24) aufweist,
**dadurch gekennzeichnet,**
**dass** das Befestigungselement (8) einen Lichtleiter (9) umfasst und/oder ein Lichtleiter (9) ist, wobei in der Befestigungsvertiefung (14) wenigstens ein mit einem Lichtleiter (9) des Befestigungselements (8) oder dem als Lichtleiter (9) ausgebildeten Befestigungselement (8) koppelbares Leuchtmittel angeordnet ist.

2. Lenkradkranz nach Anspruch 1,
**dadurch gekennzeichnet,**
**dass** der eine flächige Lichtquelle (24) bildende Lichtleiter (9) Streupartikel und/oder wenigstens eine aufgeraute Oberfläche umfasst.

3. Lenkradkranz nach Anspruch 1 oder 2,
**dadurch gekennzeichnet,**
**dass** der Bezug (7) mehrere Bezugsabschnitte (23) umfasst, denen jeweils ein Befestigungselement (8) zugeordnet ist.

4. Lenkradkranz nach einem der vorangehenden Ansprüche,
**dadurch gekennzeichnet,**
**dass** das Material des Bezugs (7) Leder oder Lederimitat oder Stoff ist.

5. Lenkradkranz nach einem der vorangehenden Ansprüche,
**dadurch gekennzeichnet,**
**dass** die Befestigungsvertiefung (14) umlaufend ist.

6. Kraftfahrzeug (1), umfassend einen Lenkradkranz (3) nach einem der vorangehenden Ansprüche.

7. Kraftfahrzeug nach Anspruch 6,
**dadurch gekennzeichnet,**
**dass** es ein Steuergerät (10) zur Aktivierung oder Deaktivierung der Lichtquelle (24) umfasst.

8. Kraftfahrzeug nach Anspruch 7,
**dadurch gekennzeichnet,**
**dass** das Steuergerät (10) zur Aktivierung und/oder Deaktivierung der Lichtquelle (24) in Abhängigkeit wenigstens einer Betriebseigenschaft des Kraftfahrzeugs (1) ausgebildet ist.

9. Kraftfahrzeug nach Anspruch 8,
**dadurch gekennzeichnet**,
die Betriebseigenschaft ein autonomer Fahrbetrieb ist, bei dessen Aktivierung die Lichtquelle (24) aktiviert wird.

10. Kraftfahrzeug nach einem der Ansprüche 6 bis 9,
**dadurch gekennzeichnet,**
**dass** bei mehreren Befestigungselementen (8) und/oder bei mehreren Lichtquellen (24) pro Befestigungselement (8) die Lichtquellen (24) unabhängig ansteuerbar sind.

11. Kraftfahrzeug nach Anspruch 10,
**dadurch gekennzeichnet,**
**dass** die Lichtquellen (24) eine Segmentanzeige bilden.

## Claims

1. Steering wheel rim (3) of a motor vehicle (1), comprising an arrangement which covers the steering wheel rim (3), and having a fastening recess (14), the arrangement comprising a cover (7), consisting in particular of a flexible and/or non-slip material, and at least one fastening element (8), in particular a clamping element, for fastening the edges (18) of the cover (7), applied around the steering wheel rim (3), in the fastening recess (14), the or at least one fastening element (8) being formed as a light source (24) and/or comprising at least one light source (24), **characterised in that** the fastening element (8) comprises a light guide (9) and/or is a light guide (9), at least one lamp, which can be coupled to a light guide (9) of the fastening element (8), or to the fastening element (8) formed as a light guide (9), being arranged in the fastening recess (14).

2. Steering wheel rim according to claim 1, **characterised in that** the one light guide (9) forming a planar light source (24) comprises diffuser particles and/or at least one roughened surface.

3. Steering wheel rim according to either claim 1 or claim 2, **characterised in that** the cover (7) comprises a plurality of cover portions (23) which are each assigned to a fastening element (8).

4. Steering wheel rim according to any of the preceding claims, **characterised in that** the cover (7) material is leather or imitation leather or fabric.

5. Steering wheel rim according to any of the preceding claims, **characterised in that** the fastening recess (14) is circumferential.

6. Motor vehicle (1) comprising a steering wheel rim (3) according to any of the preceding claims.

7. Motor vehicle according to claim 6, **characterised in that** it comprises a control device (10) for activating or deactivating the light source (24).

8. Motor vehicle according to claim 7, **characterised in that** the control device (10) is configured to activate and/or deactivate the light source (24) as a function of at least one operating property of the motor vehicle (1).

9. Motor vehicle according to claim 8, **characterised in that** the operating property is an autonomous driving mode, at the activation of which the light source (24) is activated.

10. Motor vehicle according to any of claims 6 to 9, **characterised in that**, in the case of a plurality of fastening elements (8) and/or in the case of a plurality of light sources (24) for each fastening element (8), the light sources (24) can be controlled independently.

11. Motor vehicle according to claim 10, **characterised in that** the light sources (24) form a segmented display.

## Revendications

1. Couronne de volant de direction (30) d'un véhicule à moteur (1), qui comprend un aménagement habillant la couronne de volant de direction (3) et présente un évidement de fixation (14), dans laquelle l'aménagement présente une garniture (7) en particulier constituée d'un matériau souple et/ou manipulable et au moins un élément de fixation (8), en particulier un élément de serrage pour fixer les bords (18) de la garniture (7) appliquée autour de la couronne de volant de direction (3) dans l'évidement de fixation (14), dans laquelle le ou au moins un élément de fixation (8) est conformé en source de lumière (24) et/ou présente au moins une source de lumière (24),
**caractérisée en ce que** :
l'élément de fixation (8) comprend un guide d'ondes optiques (9) et/ou est un guide d'ondes optiques (9), dans laquelle on aménage dans l'évidement de fixation (14) un moyen lumineux qui peut être couplé à un guide d'ondes optiques (9) de l'élément de fixation (8) ou à l'élément de fixation (8) conformé en guide d'ondes optiques (9).

2. Couronne de volant de direction selon la revendication 1,
**caractérisée en ce que** :
le guide d'ondes optiques (9) formant une source de lumière plate (24) comprend des particules de dispersion et/ou au moins une surface striée.

3. Couronne de volant de direction selon la revendication 1 ou la revendication 2, **caractérisée en ce que** :
la garniture (7) comprend plusieurs sections de garniture (23) auxquelles est respectivement affecté un élément de fixation (8).

4. Couronne de volant de direction selon l'une quelconque des revendications précédentes,
**caractérisée en ce que** :
le matériau de la garniture (7) est formé de cuir ou de similicuir ou de tissu.

5. Couronne de volant de direction selon l'une quelconque des revendications précédentes,
**caractérisée en ce que** :
l'évidement de fixation (14) est périphérique.

6. Véhicule à moteur (1) comprenant une couronne de volant de direction (3) selon l'une quelconque des revendications précédentes.

7. Véhicule à moteur selon la revendication 6,
**caractérisé en ce que** :
il comprend un appareil de commande (10) pour activer ou désactiver la source de lumière (24).

8. Véhicule à moteur selon la revendication 7,
**caractérisé en ce que** :
l'appareil de commande (10) est conçu pour activer et/ou désactiver la source de lumière (24) en fonction d'au moins une propriété de fonctionnement du véhicule à moteur (1).

9. Véhicule à moteur selon la revendication 8,
**caractérisé en ce que** :
la propriété de fonctionnement est un mode de conduite autonome dans l'activation duquel la source de lumière (24) est activée.

10. Véhicule à moteur selon l'une quelconque des revendications 6 à 9,
**caractérisé en ce que** :
les sources de lumière (24) peuvent être commandées indépendamment dans le cas où il y a plusieurs éléments de fixation (8) et/ou plusieurs sources de lumière (24) par élément de fixation (8).

11. Véhicule à moteur selon la revendication 10, **caractérisé en ce que** :
les sources de lumière (24) forment un affichage segmenté.
